# EUROPÄISCHE PATENTSCHRIFT

(11) **EP 2 764 970 B1**
(45) Veröffentlichungstag und Bekanntmachung des Hinweises auf die Patenterteilung: **13.01.2016**
(21) Anmeldenummer: 14000433.4
(22) Anmeldetag: 06.02.2014
(51) Int. Cl.: B29B 17/02, F42D 3/00, B29B 17/04, B29L 31/08

(54) **Verfahren zur Rückgewinnung von Fasern aus Formteilen aus Kunststoffverbundmaterialien**
Method for recovering fibres from moulded parts made of plastic composite materials
Procédé de récupération de fibres à partir de pièces moulées en matériau synthétique composite

(30) Priorität: 06.02.2013 DE 102013002005
(43) Veröffentlichungstag der Anmeldung: 13.08.2014
(73) Patentinhaber: Fraunhofer-Gesellschaft zur Förderung der angewandten Forschung e.V., 80686 München (DE)
(72) Erfinder: Woidasky, Jörg Dr., D-76149 Karlsruhe (DE); Seiler, Elisa, D-76135 Karlsruhe (DE)
(74) Vertreter: Lenz, Steffen

(56) Entgegenhaltungen:
- EP-A1- 1 366 877
- DE-A1-102007 058 893
- DE-A1-102010 046 685
- JP-A- H0 524 000
- JP-A- S61 113 971
- JP-A- S63 142 044

## Beschreibung

Die Erfindung betrifft ein Verfahren zur Rückgewinnung von Fasern und/oder Armierungen aus, insbesondere großformatigen, Formteilen aus Kunststoffverbundmaterialien.

Kunststoffverbundmaterialien auf der Basis von Polymeren, welche insbesondere an den Stellen sehr hoher mechanischer Beanspruchung aus einer mit Faserverstärkungen und/oder mit Armierungen sowie gegebenenfalls Füllstoffen versehenen Kunststoff- oder Harzmatrix gefertigt sind, finden insbesondere für verhältnismäßig großformatige Formteile in Form von konstruktiven Bauteilen, z.B. für Gebäude sowie für Fahrzeuge, Flugzeuge und Schiffe, und anderen Produkten verbreitet Verwendung. Beispielhaft seien in diesem Zusammenhang Flugzeugrümpfe und -flügel, Schiffsrümpfe und Bootskörper, Tanks sowie insbesondere Rotoren sowie Gondeln von Windkraftanlagen erwähnt. Letztere gewinnen im Zuge des zunehmenden Bedarfs an einer Energieerzeugung ohne den Einsatz fossiler Brennstoffe zunehmend an Bedeutung. Problematisch bei solchen Formteilen ist insbesondere ihre Entsorgung, welche sich einerseits aufgrund ihrer großen Abmessungen, andererseits aufgrund des faserverstärkten und/oder armierten Matrixmaterials als aufwändig erweist, welches in aller Regel aus mehr oder minder stark vernetzten Polymeren bzw. Polymermischungen oder -Blends besteht, welche im Gegensatz zu thermoplastischen Kunststoffen ein nur sehr bedingtes Recycling erlauben. Indes wäre eine zumindest teilweise Rückgewinnung zumindest des Faseranteils solcher Bauteile oder Produkte sowohl aus wirtschaftlichen als auch aus Umweltgründen wünschenswert, zumal die Deponierung von derartigen Kunststoffverbundwerkstoffen aufgrund ihres relativ hohen Anteils an organischem Material von üblicherweise mindestens 30 Mass.-% in Deutschland untersagt ist. Entsprechendes gilt hinsichtlich einer Rückgewinnung von Armierungen, welche Bauteile oder Produkte der vorgenannten Art besitzen können, um an denjenigen Stellen, wo eine besonders hohe mechanische Belastung zu erwarten ist, für eine zusätzliche Stabilisierung zu sorgen.

Anlässlich der Entsorgung derartiger Bauteile ist es für glasfaserverstärkte Bauteile aus duroplastischen Polymermaterialien, wie insbesondere Rotorblättern von Windkraftanlagen, gegenwärtig bekannt, die Bauteile zu zerkleinern und als alternativen Brennstoff oder als Füllstoff bei der Herstellung von Klinkern in einem Zementherstellungsverfahren einzusetzen (WO 2010/148418 A1). Indes ist eine Wieder- oder Weiterverwendung der wirtschaftlich wertvollen Fasern in der ihnen zugedachten Funktion auf diese Weise nicht möglich und erfordert die Zerkleinerung des faserverstärkten Duroplastmaterials aufwändige Maßnahmen, um dafür Sorge zu tragen, dass die hierbei entstehenden, staubförmigen und potenziell gesundheitsgefährdenden Teilchen nicht in die Umgebung gelangen. Darüber hinaus ist die Verbrennung solcher Bauteile, beispielsweise in Müllverbrennungs- oder Feuerungsanlagen, auch insoweit bedenklich, als die duroplastische Kunststoffmatrix selbst sowie hierin gegebenenfalls enthaltene andere Bestandteile, z.B. Schaumstoffeinleger, Beschichtungen und dergleichen, häufig Halogene, insbesondere Chlor, enthalten können, welches bei der Verbrennung zu höchst toxischen Verbrennungsprodukten, wie beispielsweise chlorierten Dioxinen und Furanen, führen kann.

Soweit eine stoffliche Wiederverwendung derartiger Bauteile aus faserverstärkten Duroplastmatrices bekannt ist, so beruhen auch diese zumeist auf rein mechanischen Zerkleinerungsprozessen. Die EP 0 443 051 A1 beschreibt ein Verfahren zur Herstellung einer duroplastischen Pressmasse aus einem Glasfaser-Polyester-Verbundwerkstoff. Hierbei werden die zu entsorgenden Bauteile durch mechanische Zerkleinerung mittels eines Schlagwerks und anschließender Abtrennung in einem Rüttelsieb in eine vornehmlich Pulver und eine vornehmlich Faserfragmente enthaltende Fraktion aufgetrennt. Erstere wird auf eine Korngröße kleiner 500 µm gemahlen und nach Zumischen von Netzmitteln als Füllstoff in Harzpasten eingesetzt. Die die zerkleinerten Fasern enthaltende Fraktion kann - ebenfalls nach entsprechender Vorbehandlung - erneut als faserförmiger Füllstoff für neue Bauteile bzw. als zur Verstärkung dienende Kurzfaser eingesetzt werden.

Der EP 0 473 990 A2 ist ein ähnliches Verfahren zur Wiederverwertung von gemahlenen Kunststoffpartikeln aus zu entsorgenden Bauteilen mit einer faserverstärkten, duroplastischen Kunststoffmatrix zu entnehmen, indem das Mahlgut, gegebenenfalls unter Zugabe von Zuschlagsstoffen, als Füll- und/oder Verstärkungsmaterial beim Gießen neuer duroplastischer Polymer-Formteile eingesetzt wird. Die mehrstufige Zerkleinerung erfolgt wiederum mechanisch mittels Schneid- oder Prallmühlen bzw. mittels Hammer- oder Rotormühlen.

Bei beiden vorgenannten Verfahren werden die zu entsorgenden Bauteile folglich gänzlich mechanisch fein zerkleinert, woraus sich wiederum die oben geschilderten Nachteile ergeben. Darüber hinaus lassen sich die Fasern allenfalls in Form von sehr kleinen Bruchstücken wiedergewinnen und vermag das erhaltene Rezyklat folglich nur bedingt eine Verstärkungsfunktion in neuen Polymer-Formteilen zu erfüllen.

Die DE 42 05 119 A1 beschreibt ein Verfahren zur Herstellung einer duroplastischen Pressmatte aus einem duroplastischen Faser-Harz-Verbundwerkstoff, wobei ein streufähiges Rezyklat aus glasfaserverstärkten Duroplasten eingesetzt wird, welches in einem Schneckenmischer mit einer Harzpaste vermischt und die hieraus resultierende Pressmasse bahnförmig ausgebracht und ausgehärtet wird. Die zur Gewinnung des streufähigen Rezyklates eingesetzten Bauteile aus Faserverbundwerkstoffen werden wiederum vorzerkleinert, was mittels eines mehrstufigen Zerkleinerungs- und Mahlprozesses geschieht. Eine anschließende Fraktionierung in unterschiedliche Partikelgrößen gewährleistet eine Nutzung als bloßen Füllstoff bzw. als zur Verstärkung dienendes Kurzfasermaterial. Hinsichtlich der Nachteile gilt weitestgehend das zum obigen Stand der Technik gesagte.

Aus der DE 10 2010 046 685 A1 ist ein Verfahren zur Aufbereitung von Rotorblättern von Windkraftanlagen bekannt, gemäß welchem das faserverstärkte Faserbundmaterial mittels mehrfacher mechanischer Zerkleinerung und Klassierung in sortenreine Fraktionen, insbesondere einerseits Glasmehl, andererseits Harzmehl, aufgeteilt werden soll.

Die DE 10 2007 058 893 A1 beschreibt ein Recyclingverfahren für gegebenenfalls auch Armierungen enthaltende Kunststoff-Faserverbundwerkstoffe, indem ein aus einem solchen Faserverbundwerkstoff gebildetes Bauteil vorzerkleinert und die hierbei entstehenden Teile anschließend einer Prallmühle aufgegeben werden. Je nach Art der Zusammensetzung der Faserverbundwerkstoffe kann die Vorzerkleinerung der Bauteile dabei auf eine bestimmte Teilchengröße erfolgen, wonach entschieden werden kann, ob eine Fraktion weiter zerkleinert oder sogleich der Prallmühle aufgegeben wird, um den Faseranteil zurückzugewinnen.

Der DE 670 942 A ist ein Verfahren zur Faserrückgewinnung aus faserhaltigen Kautschukabfällen in Form von Altreifen zu entnehmen, indem die Karkassen der Altreifen mit hohem Faseranteil von den Wülsten der Altreifen mit geringem Faseranteil abgetrennt werden, wonach die Fasern zumindest der Karkassen von der vulkanisierten Kautschukmatrix abgetrennt werden.

In der EP 1 366 877 A1 geht es um ein weiteres Verfahren zur Zerkleinerung von mit Metallfasern oder -armierungen versehenen Altreifen, indem aus dem Altreifenmaterial ein Gebinde erzeugt und das Gebinde einer Sprengkammer aufgegeben wird, in welcher eine Explosivstoffladung gezündet wird. Anlässlich des Zündens der Explosivstoffladung wird das Material in mehrere Fraktionen zerlegt, nämlich einerseits in eine Mischung aus Gummipulver, andererseits in Stränge der Textilfasern sowie in Bruchstücke der Metallarmierungen. Anlässlich einer Vorzerkleinerung der Altreifen mittels Schneideeinrichtungen können die Felgenringe und die Reifenflanken von den Laufflächen der Reifen abgetrennt werden.

In der JP H05-02400 A geht es schließlich um die Zerlegung eines Bootskörpers aus glasfaserverstärkten Kunststoffmaterialien mittels Sprengladungen anlässlich dessen Verschrottung.

Der Erfindung liegt die Aufgabe zugrunde, ein Verfahren zur Rückgewinnung von Fasern aus, insbesondere großformatigen, Formteilen aus Kunststoffverbundmaterialien vorzuschlagen, welches eine wirtschaftliche Rückgewinnung zumindest eines Anteils der Verstärkungsfasern und/oder Armierungen ermöglicht und insbesondere eine Wiederverwendung derselben in Form von Lang- oder quasi Endlosfasern zur Faserverstärkung neuer Formteile auch im Falle eines Einsatzes von Bauteilen oder Produkten aus duroplastischen Kunststoffverbundmaterialien gewährleistet.

Erfindungsgemäß wird diese Aufgabe mit einem gattungsgemäßen Verfahren der eingangs genannten Art dadurch gelöst, wobei
- zunächst Bereiche des Formteils mit einem hohen Anteil an Fasern und/oder Armierungen sowie mit einem demgegenüber geringeren Anteil an Fasern und/oder Armierungen identifiziert werden; wonach
- das Formteil entsprechend den zuvor identifizierten Bereichen mit einem hohen Anteil an Fasern und/oder Armierungen sowie einem demgegenüber geringeren Anteil an Fasern und/oder Armierungen unter Bildung von wenigstens zwei Fraktionen von Formteilfragmenten mit einem hohen sowie einem demgegenüber geringeren Anteil an Fasern und/oder'Armierungen mittels Sprengladungen zerlegt wird; und
- die Fasern und/oder Armierungen zumindest aus wenigstens einer Fraktion mit hohem Anteil an Fasern und/oder Armierungen durch selektive Abtrennung der Kunststoffmatrix von den Fasern und/oder Armierungen zurückgewonnen werden.

Das erfindungsgemäße Verfahren ermöglicht sowohl eine ökonomische als auch eine ökologische, nachhaltige Rückgewinnung zumindest des Hauptanteils an Fasern und/oder Armierungen der eingesetzten Bauteile oder Produkte, indem beispielsweise die Fasern eine werkstofflichen Verwendung als Lang- oder quasi Endlosfasern in neuen faserverstärkten Polymer-Formteilen finden können und beispielsweise auch zwei oder mehrdimensionale Faserstrukturen mehr oder minder gänzlich zurückgewonnen werden können. Entsprechendes gilt für Armierungen, welche von der Polymermatrix der Kunststoffverbindmaterialien abgetrennt worden ist. Dabei wird berücksichtigt, dass die Verstärkungsfasern sowie auch Armierungen insbesondere in großformatigen Bau- oder Formteilen üblicherweise in unterschiedlichen Bereichen angeordnet sind, so dass in faserarmen Bereichen, in welchen sich eine Rückgewinnung der mehr oder minder unzerkleinerten bzw. unzermahlenen Fasern nicht lohnt, die Fasern entsprechend dem Stand der Technik verwertet werden können, während sie in den Bereichen des Bau- oder Formteils mit hohem Faseranteil, vorzugsweise im Wesentlichen vollständig, gewonnen und rezykliert werden können.

In diesem Zusammenhang sieht die Erfindung vor, dass zunächst Bereiche des Formteils mit einem hohen Anteil an Fasern und/oder Armierungen sowie mit einem demgegenüber geringeren Anteil an Fasern und/oder Armierungen identifiziert werden, wonach das Formteil entsprechend den zuvor identifizierten Bereichen mit einem hohen Anteil an Fasern und/oder Armierungen sowie einem demgegenüber geringeren Anteil an Fasern und/oder Armierungen unter Bildung der wenigstens zwei Fraktionen von Formteilfragmenten mit einem hohen sowie einem demgegenüber geringeren Anteil an Fasern und/oder Armierungen zerlegt wird. Die Identifizierung solcher Form- bzw. Bauteilbereiche kann dabei vor Ort, wie beispielsweise am Standort einer zu demontierenden Windkraftanlage, geschehen.

Die (Vor)zerlegung des Bau- oder Formteils unter Bildung der Fraktionen mit unterschiedlichen Faseranteilen kann insbesondere gleichfalls vor Ort, z.B. am Standort der Windkraftanlage, deren Altrotorblätter und/oder Gondel entsorgt werden müssen, geschehen, so dass auf einfache Weise eine getrennte, selektive Aufarbeitung der entsprechenden Zielprodukte möglich ist. Gegebenenfalls nur energetisch zu verwertende Anteile des Bauteils oder Produktes lassen sich somit auf ein Mindestmaß reduzieren. Überdies gestaltet sich der Transportaufwand als einfacher, da die Länge bzw. das Volumen der Bauteile oder Produkte durch die fraktionierte (Vor)zerlegung reduziert worden ist. Mit "quasi Endlosfasern" sind in diesem Zusammenhang im Übrigen solche Fasern angesprochen, welche in dem zu recycelnden Bau- bzw. Formteil als Endlosfasern verarbeitet worden sind und nach der erfindungsgemäßen Rückgewinnung eine Länge aufweisen, welche immer noch größer, insbesondere deutlich größer, ist als die sogenannter Langfasern, welche in Faser-KunststoffVerbundmaterialien definitionsgemäß eine Länge von etwa 1 mm bis etwa 50 mm aufweisen, während Kurzfasern von Faser-Kunststoff-Verbundmaterialien definitionsgemäß eine Länge von etwa 0,1 mm bis etwa 1 mm besitzen.

Im Hinblick auf die in aller Regel insbesondere im Falle von mehr oder minder duroplastischen Kunststoffverbundmaterialien problematische Abtrennung von Fasern oder Armierungen von der Kunststoffmatrix erweist sich die erfindungsgemäße Zerlegung des Formteils mittels Sprengladungen als besonders vorteilhaft, da sie nicht nur eine wirtschaftliche Zerlegung der Bau- bzw. Formteile entsprechend ihrem Fasergehalt und/oder ihrem Armierungsanteil vor Ort möglich macht, um auch den logistischen Aufwand anlässlich des Abtransportes des Formteils zu minimieren, sondern vermögen die bei der Detonation solcher Ladungen auftretenden Schwingungen, welche sich in der Polymermatrix der Kunststoffverbundmaterialien üblicherweise mit einer unterschiedlichen Geschwindigkeit ausbreiten wie in hierin enthaltenden Verstärkungsfasern und/oder Armierungen, zusätzlich zu einer zumindest teilweisen Abtrennung der, insbesondere auch duroplastischen, Polymermatrix von den Faser- und/oder Armierungsstrukturen an deren Grenzflächen beizutragen, so dass die Bindung der Fasern und/oder Armierungen an die Polymermatrix zumindest bereichsweise deutlich reduziert wird, was wiederum zu einer einfacheren Abtrennung der Fasern/Armierungen von der Polymermatrix führt.

Das erfindungsgemäße Verfahren bietet sich folglich insbesondere, wenn auch nicht ausschließlich, zum Einsatz von Bau- bzw. Formteilen oder auch von anderen Produkten aus Lang- und/oder Endlosfasern enthaltenden Kunststoffverbundmaterialien an, welche auch in Form von Faserbündeln, zwei- und/oder dreidimensionalen Faserstrukturen und dergleichen vorliegen können, wobei solche Faserstrukturen mehr oder minder gänzlich oder auch stückweise abgelängt zurückgewonnen und wiederverwertet werden können.

In bevorzugter Ausgestaltung kann vorgesehen sein, dass die Zerlegung des Formteils mittel vornehmlich linienförmiger Sprengladungen, insbesondere mittels Sprengschnüren bzw. Schneidladungen, geschieht. Auf diese Weise lassen sich die faserreichen und/oder armierten Bereiche oder Abschnitte des Bau- bzw. Formteils sehr zielgerichtet von den faserarmen und/oder armierungsfreien bzw. -armen Bereichen oder Abschnitten abtrennen, indem die Sprengschnüre oder Schneidladungen zwischen solchen Bau- bzw. Formteilbereichen positioniert werden, wobei eine derartige Zerlegung der Formteile durch Zünden der Sprengschnüre bzw. Schneidladungen - wie oben bereits erwähnt - vorzugsweise am Stand- oder Errichtungsort der Bau- bzw. Formteile stattfinden kann.

Zur Minimierung von Staubemissionen und hierdurch bedingter gesundheitlicher Gefährdungen ist es in diesem Zusammenhang auch denkbar, dass zumindest entlang dem Verlauf der Sprengschnüre bzw. Schneidladungen Sprengmatten oder auch mit Wasser befüllte Behältnisse auf das zu zerlegende Bau- oder Formteil aufgebracht werden, so dass der bei der Detonation erzeugte Staub entweder zurückgehalten oder von dem aus den bei der Detonation berstenden Behältnissen, z.B. aus Kunststofffolien, austretendem Wasser gebunden wird.

Alternativ oder zusätzlich kann in vorteilhafter Ausgestaltung vorgesehen sein, dass die Zerlegung des Formteils im Falle von hohlen Formteilen durch zumindest teilweise Anordnung von Sprengladungen in zumindest einigen Hohlräumen und Aktivieren der Sprengladungen geschieht. Letzteres bietet sich beispielsweise im Falle von Rotorblättern von Windkraftanlagen an, welche üblicherweise als Hohlteile mit geeigneten Versteifungsstrukturen, welche innerhalb des Rotorblattes getrennte oder zusammenhängende Kammern bilden, ausgebildet sind.

Auch in diesem Fall kann es aus den oben genannten Gründen selbstverständlich von Vorteil sein, wenn zumindest einige Hohlräume des Formteils mit Wasser befüllt werden, um die bei der Detonation der Sprengladungen entstehenden Staubemissionen zu binden. Sofern die Hohlräume des Formteils zusammenhängende Kammern bilden, können die Kammern beispielsweise vor dem Sprengen mit Hilfe von Wasser abdichtenden Elementen oder Stoffen verschlossen und mit Wasser befüllt werden.

Als für die Sprengladungen eingesetzte Sprengstoffe bieten sich um Übrigen praktisch alle handelsüblichen Spreng- und Explosivstoffe an, wie beispielsweise 2,4,6-Trinitrotoluol (TNT), 1,3,5-Triamino-2,4,6-trinitrobenzol (TATBN), 3-Nitro-1,2,4-triazol-5-on (NTO), Hexanitrostilben (HNS), Cyclotrimethylentrinitramin (Hexogen, RDX), Cyclotetramethylentetranitramin (Oktogen, HMX), 2,4,6,8,10,12-Hexanitro-2,4,6,8,10,12-hexaazaisowurtzitan (HNIW, CL20), 1-Diamino-2,2-dinitroethylen (DADE, FOX7), FOX12, Pentaerythritoltetranitrat (Nitropenta, PETN), Hexanitrodiphenylamin (Hexyl), Tetranitromethylanilin (Tetryl), Nitroguanidin (NQ), Triaminoguanidinnitrat (TAGN), Ammoniumnitrat (AN), Ammoniumperchlorat (AP), Kaliumnitrat (KN), Natriumnitrat und dergleichen. In jedem Fall ist eine effektive und exakte Trennung der Formteilbereiche hohen Anteils an Fasern und/oder Armierungen von denjenigen mit demgegenüber geringerem Anteil möglich.

Was die eingesetzten Form- oder Bauteile betrifft, so können diese Fasern und/oder Armierungen aus praktisch beliebigen bekannten Verstärkungsmaterialien enthalten, wobei deren Bindung mit der Polymermatrix der Kunststoffverbundmaterialien durch die detonative Zerlegung verringert wird. So können beispielsweise Form- bzw. Bauteile oder andere Produkte mit Fasern aus der Gruppe Glas-, Carbon-, Metall- und Aramidfasern sowie Gemischen hieraus verwendet werden. Desgleichen können Form- bzw. Bauteile oder andere Produkte zum Einsatz gelangen, welche Armierungen aus der Gruppe Glas-, Carbon-, Metall-, wie beispielsweise aus Stahl, Kupfer etc., Aramidarmierungen sowie Mischungen hieraus aufweisen.

Während das erfindungsgemäße Verfahren selbstverständlich grundsätzlich auch für faserverstärkte Form- bzw. Bauteile oder andere Produkte mit einer thermoplastischen Polymermatrix geeignet ist, bietet es sich insbesondere auch für Form- bzw. Bauteile oder Produkte aus einer mit Kurz-, Lang- sowie insbesondere Endlosfasern verstärkten duroplastischen Polymermatrix an, welche aufgrund Vernetzung der Molekülketten nach Aushärtung zu dem zu recycelnden Bau- bzw. Formteil nicht aufgeschmolzen werden kann und welche üblicherweise für die hier vornehmlich in Frage stehenden Bau- und Formteile zum Einsatz kommt.

Die Identifizierung der Bereiche hohen und demgegenüber geringeren Anteils an Fasern und/oder Armierungen des Bau- bzw. Formteils kann vorzugsweise mittels akustischer (z.B. Ultraschall), spektroskopischer (z.B. Röntgenspektroskopie), thermographischer oder induktiver Verfahren geschehen. Soweit vorhanden, können beispielsweise auch Konstruktionszeichnungen oder -pläne der Bau- bzw. Formteile herangezogen werden, um die Fasern bzw. die Armierungen und insbesondere deren Anteil in dem Formteil zu identifizieren. Darüber hinaus ist es durch den Einsatz von materialspezifischen Identifizierungsverfahren auch möglich, in einem Bau- bzw. Formteil enthaltene, unterschiedliche Faserarten, z.B. einerseits Glas-, andererseits Carbonfasern oder dergleichen, zu identifizieren, wonach die verschiedenen Faserarten, sofern gewünscht, im Wesentlichen sortenrein zurückgewonnen werden können. Entsprechendes gilt selbstverständlich für den Fall, sofern das Bau- bzw. Formteil mehrere Armierungen oder Verstärkungen aus unterschiedlichen Materialien, wie beispielsweise einerseits Stahl, andererseits Kupfer oder dergleichen, enthält.

Im Rahmen der Fraktionierung kann beispielsweise vorgesehen sein, dass die Bildung der wenigstens zwei Fraktionen von Bau- bzw. Formteilfragmenten mit einem hohen sowie einem demgegenüber geringeren Anteil an Fasern und/oder Armierungen durch Festlegen eines Schwellenwertes für den Anteil an Fasern und/oder Armierungen im Bereich von 25 Mass.-% bis 70 Mass.-%, insbesondere im Bereich von 30 Mass.-% bis 60 Mass.-%, geschieht. Der vorherbestimmbare Schwellenwert kann selbstverständlich auch jenseits der genannten Grenzen liegen, sofern beispielsweise bestimmte Faserstrukturen zurückgewonnen werden sollen, welche jedoch nur in einem relativ niedrigen prozentualen Anteil in Bezug auf den Anteil an Polymermatrix vorliegen. Der Schwellenwert für den Faser- und/oder den Armierungsanteil kann ferner beispielsweise für beide oder auch nur für eine der genannten Komponenten auch auf 0 gesetzt werden, so dass beispielsweise die Armierungen sämtlicher mit Armierungen versehenen Bereiche des Bau- oder Formteils zurückgewonnen werden, während bei den Fasern aufgrund eines demgegenüber höheren Schwellenwertes zwischen faserreichen und faserarmen Bereichen unterschieden wird (oder umgekehrt). Ein "geringer Anteil" an Fasern bzw. Armierungen im Sinne der vorliegenden Erfindung schließt folglich einen Anteil von 0 mit ein.

In diesem Zusammenhang sei nochmals explizit darauf hingewiesen, dass selbstverständlich auch mehr als zwei Fraktionen von Form- bzw. Bauteilfragmenten gebildet werden können, wenn es beispielsweise darum geht, bestimmte Fasern und/oder Armierungen aus verschiedenen Materialien möglichst sortenrein zurückzugewinnen, nachdem sie z.B. zuvor stoffspezifisch identifiziert worden sind. Darüber hinaus ist es denkbar, auch eine Fraktion von zuvor identifizierten potenziellen Stör- oder Schadstoffen zu bilden, wie beispielsweise von in dem Form- bzw. Bauteil verarbeiteten Schäumen, welche z.B. Halogene enthalten können, die bei der thermischen Verwertung zur Bildung von Schadstoffen in der Lage sind.

Die selektive Abtrennung der Kunststoffmatrix von den Fasern und/oder Armierungen bei der Fraktion mit hohem Anteil an Fasern und/oder Armierungen kann insbesondere im Falle einer duroplastischen Polymermatrix des Bau- bzw. Formteils in vorteilhafter Ausgestaltung mittels Pyrolyse, Thermolyse oder Solvolyse geschehen, um die in dem Bauteil oder Produkt vorhandenen Fasern als möglichst lange Endlos- oder Langfasern bzw. die in dem Bau- bzw. Formteil vorhandenen zwei- oder dreidimensionalen Faserstrukturen mehr oder minder gänzlich zurückzugewinnen. Eine duroplastische Harzmatrix kann dabei vorzugsweise bei hohen Temperaturen, insbesondere im Bereich von etwa 500°C bis etwa 1000°C, unter Sauerstoffmangel pyrolytisch zersetzt werden, oder sie wird bei hoher Temperatur durch Thermolyse chemisch umgesetzt, wobei die Fasern/Faserstrukturen jeweils zurückbleiben. Entsprechendes gilt im Falle einer solvolytischen Abtrennung einer duroplastischen Harzmatrix von den Fasern in Gegenwart von Lösungsmitteln. In jedem Fall ist infolge eines wirksamen Aufschlusses solcher, insbesondere duroplastischer Kunststoffverbundwerkstoffe ein Erhalt qualitativ hochwertiger Verstärkungsfasern großer Länge möglich, welche zumindest weitestgehend frei von duroplastischen Kunststoffresten oder auch gegebenenfalls hierin enthaltenen Füllstoffen ist, wozu insbesondere auch die detonative Zerlegung beiträgt (siehe oben). Entsprechendes gilt für die Rückgewinnung von in den Bau- bzw. Formteilen enthaltenen Armierungen oder anderer werthaltiger Bestandteile, wie beispielsweise Metallen oder Metalllegierungen.

Während die Verstärkungsfasern und/oder Armierungen aus der faser- bzw. armierungsreichen Fraktion in der oben genannten erfindungsgemäßen Weise zurückgewonnen und erneut als Verstärkungsfasern oder Armierungen für neue Bau- bzw. Formteile oder Produkte eingesetzt werden können, kann die Fraktion mit geringerem Faser- und/oder Armierungsanteil zerkleinert werden, was beispielsweise mittels beliebiger bekannter mechanischer Zerkleinerungsverfahren, wie jenen gemäß dem eingangs beschriebenen Stand der Technik, erfolgen kann. So können beispielsweise mehr- oder insbesondere einstufige Zerkleinerungsverfahren Anwendung finden, wie z.B. eine Prallzerkleinerung mittels Prallreaktoren.

Die zu Pulvern und/oder Granulaten zerkleinerte Fraktion geringen Anteils an Fasern und/oder Armierungen kann ihrerseits als Füllstoff oder als Kurzfaser-Verstärkungsstoff eingesetzt oder thermisch, wie z.B. als Bestandteil von Ersatzbrennstoffen, verwertet werden, wobei einer stofflichen Verwertung, wie sie als solche aus dem Stand der Technik bekannt ist, der Vorzug zu geben ist. Gleichwohl ist selbstverständlich auch ein Einsatz als thermischer Energieträger denkbar.

Darüber hinaus kann das anlässlich der Zerkleinerung der Fraktion mit geringem Anteil an Fasern und/oder Armierungen erhaltene Pulver und/oder Granulat vorzugsweise auch in Unterfraktionen aus der Gruppe zerkleinerte Fasern, zerkleinerte Armierungsbestandteile, zerkleinerte (duroplastische) Kunststoffmatrix, Mischung aus zerkleinerter (duroplastischer) Kunststoffmatrix mit noch enthaltenen Faser- und/oder Armierungsfragmenten und gegebenenfalls Füllstoffe fraktioniert werden, um auch insoweit zumindest den Anteil an Fasern und/oder Armierungen von der Kunststoffmatrix abzutrennen und als Füllstoff, beispielsweise in der Neuherstellung von faserverstärkten Kunststoffverbundwerkstoffen, einzusetzen. Darüber hinaus kann auch hier eine mehr oder minder sortenreine Fraktionierung unter Aufteilung der Faser- und/oder Armierungsbestandteile in deren unterschiedliche Materialien vorgesehen sein.

Wie bereits erwähnt, bietet sich das erfindungsgemäße Verfahren grundsätzlich für beliebige Form- bzw. Bauteile oder Produkte aus thermoplastischen sowie insbesondere aus duroplastischen Kunststoffverbundwerkstoffen an, wobei es vorzugsweise auf das Recycling von Form- bzw. Bauteilen aus der Gruppe Rotorblätter und Gondeln für Windkraftanlagen, Schiffsrümpfe und Bootskörper, Flugzeugrümpfe und -flügel sowie Tanks angewandt werden kann. Dabei können als Form- bzw. Bauteile insbesondere Altrotorblätter von Windkraftanlagen verwendet werden, welche häufig zu bereichsweise sehr unterschiedlichen Anteilen aus Fasern, vornehmlich aus der Gruppe Glas- und Carbonfasern, Füllstoffen, wie beispielsweise PVC-Schaumstoffen, Balsaholz etc., und duroplastischen Kunststoffen, wie beispielsweise Epoxid- und/oder (ungesättigten) Polyesterharzen, als Matrixharz gefertigt sind und es gemäß dem Stand der Technik daher bislang nicht möglich ist, für eine Rückgewinnung der Fasern in Form von Endlos- oder Langfasern bzw. Endlos- oder Langfaserstrukturen zu sorgen. Demgegenüber gewährleistet die Erfindung auch hier eine Rückgewinnung von Fasern zumindest aus den Bau- bzw. Formteilbereichen mit hohem Faseranteil (also dort, wo es sowohl wirtschaftlich als auch aus Umweltgründen sinnvoll ist) sowie von Armierungen, indem die insbesondere voridentifizierten Bereiche hohen Faser- bzw. Armierungsanteils, vorzugsweise bereits vor Ort, von den Bereichen mit demgegenüber geringen Anteilen mittels Sprengladungen demontiert bzw. abgetrennt und die derart erhaltenen Fraktionen, in welchen infolge der detonativen Zerlegung bereits eine zumindest teilweise Ablösung der Polymermatrix von den Verstärkungsfasern und/oder Armierungen erzielt worden ist, unterschiedlichen Aufbereitungsprozessen zugeführt werden können, welche zumindest die Rückgewinnung der Endlos- oder Langfasern und/oder der Armierungen aus der faserreichen bzw. mit Armierungen versehenen Fraktion umfassen.

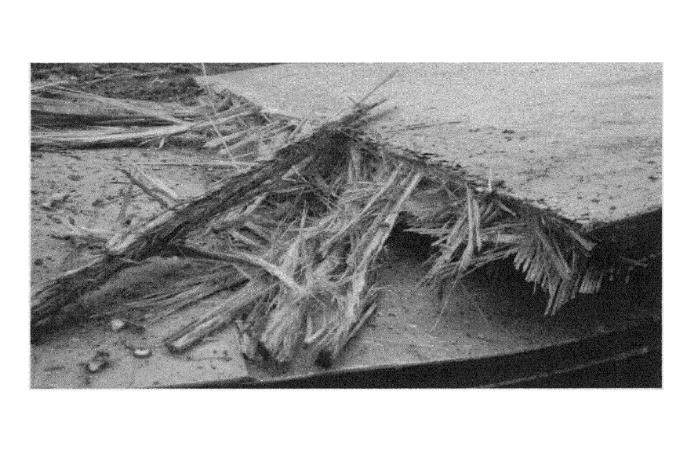

Nachstehend ist das erfindungsgemäße anhand eines rein exemplarischen Ausführungsbeispiels unter Bezugnahme auf die Zeichnung veranschaulicht.

### Ausführungsbeispiel:

Zur Rückgewinnung der Verstärkungsfasern aus einem Rotorblatt einer Windkraftanlage, welches einen Durchmesser von etwa 40 cm aufweist und aus einem sandwichartig aufgebauten Kunststoffverbundmaterial aus glasfaserverstärktem Epoxidharz in der Außenhaut und Kunststoffschaum im Innern als Füllstoff gefertigt ist, wurden nach vorheriger Identifizierung faserreicher bzw. faserarmer Bereiche letztere von ersteren abgetrennt, indem auf das Rotorblatt zwischen diesen Bereichen Sprengschnüre des Typs "Seismocord 20" auf der Basis von Pentaerythritoltetranitrat (Nitropenta, PETN) in einer Sprengstoffbelegung von etwa 20 g/m aufgebracht wurden. Die Sprengschnüre wurden über den Rand des Rotorblattes hinweg verlängert und zusammengeführt, um alle Sprengschnüre gleichzeitig mittels einer Sprengkapsel zünden zu können. Nach der Zündung und Detonation der Sprengschnüre mit einer Umsetzungsgeschwindigkeit von etwa 6600 m/s wurde das Rotorblatt in je eine Fraktion hohen und geringen Faseranteils zerlegt, wobei die Fasern insbesondere der Fraktion hohen Faseranteils zurückgewonnen werden können. Dabei führte die detonative Zerlegung des Rotorblattes mittels der Sprengschnüre insbesondere zu einer erheblichen Ablösung der duroplastischen Epoxidharzmatrix von den Glasfasern, welche die Rückgewinnung der Fasern, insbesondere in Form von Langfasern, entscheidend vereinfacht.

Letzteres ist insbesondere aus der einzigen Figur erkennbar, welche ein Fragment des Rotorblattes mit hohem Faseranteil zeigt, wobei die Faserkonvolute im Trennbereich allein infolge Detonation der Sprengschnüre gänzlich freiliegen, während sie im Innern des Fragmentes gleichfalls bereits relativ großflächig von der duroplastischen Polymermatrix gelöst worden sind.

## Patentansprüche

1. Verfahren zur Rückgewinnung von Fasern und/oder Armierungen aus, insbesondere großformatigen, Formteilen aus Kunststoffverbundmaterialien, wobei
- zunächst Bereiche des Formteils mit einem hohen Anteil an Fasern und/oder Armierungen sowie mit einem demgegenüber geringeren Anteil an Fasern und/oder Armierungen identifiziert werden; wonach
- das Formteil entsprechend den zuvor identifizierten Bereichen mit einem hohen Anteil an Fasern und/oder Armierungen sowie einem demgegenüber geringeren Anteil an Fasern und/oder Armierungen unter Bildung von wenigstens zwei Fraktionen von Formteilfragmenten mit einem hohen sowie einem demgegenüber geringeren Anteil an Fasern und/oder Armierungen mittels Sprengladungen zerlegt wird; und
- die Fasern und/oder Armierungen zumindest aus wenigstens einer Fraktion mit hohem Anteil an Fasern und/oder Armierungen durch selektive Abtrennung der Kunststoffmatrix von den Fasern und/oder Armierungen zurückgewonnen werden.

2. Verfahren nach Anspruch 1, **dadurch gekennzeichnet, dass** die Zerlegung des Formteils mittels vornehmlich linienförmiger Sprengladungen, insbesondere mittels Sprengschnüren, geschieht.

3. Verfahren nach Anspruch 2, **dadurch gekennzeichnet, dass** zumindest entlang dem Verlauf der Sprengschnüre Sprengmatten oder mit Wasser befüllte Behältnisse auf das zu zerlegende Formteil aufgebracht werden.

4. Verfahren nach einem der Ansprüche 1 bis 3, **dadurch gekennzeichnet, dass** die Zerlegung des Formteils im Falle von hohlen Formteilen durch zumindest teilweise Anordnung von Sprengladungen in zumindest einigen Hohlräumen und Aktivieren der Sprengladungen geschieht.

5. Verfahren nach Anspruch 4, **dadurch gekennzeichnet, dass** zumindest einige Hohlräume des Formteils mit Wasser befüllt werden.

6. Verfahren nach einem der Ansprüche 1 bis 5, **dadurch gekennzeichnet, dass** Formteile aus Lang- und/oder Endlosfasern, insbesondere in Form von Faserbündeln, zwei- und/oder dreidimensionalen Faserstrukturen, enthaltenden Kunststoffverbundmaterialien eingesetzt werden.

7. Verfahren nach einem der Ansprüche 1 bis 6, **dadurch gekennzeichnet, dass** Formteile mit
- Fasern aus der Gruppe Glas-, Carbon-, Metall- und Aramidfasern sowie Mischungen hieraus und/oder
- Armierungen aus der Gruppe Glas-, Carbon-, Metall- und Aramidarmierungen sowie Mischungen hieraus verwendet werden.

8. Verfahren nach einem der Ansprüche 1 bis 7, **dadurch gekennzeichnet, dass** Formteile aus Kunststoffverbundmaterialien mit einer duroplastischen Kunststoffmatrix verwendet werden.

9. Verfahren nach einem der Ansprüche 1 bis 8, **dadurch gekennzeichnet, dass** die Identifizierung der Bereiche hohen und demgegenüber geringeren Anteils an Fasern und/oder Armierungen mittels akustischer, spektroskopischer, thermographischer oder induktiver Verfahren geschieht.

10. Verfahren nach einem der Ansprüche 1 bis 9, **dadurch gekennzeichnet, dass** die Bildung der wenigstens zwei Fraktionen von Formteilfragmenten mit einem hohen sowie einem demgegenüber geringeren Anteil an Fasern und/oder Armierungen durch Festlegen eines Schwellenwertes für den Anteil an Fasern und/oder Armierungen im Bereich von 25 Mass.-% bis 70 Mass.-%, insbesondere im Bereich von 30 Mass.-% bis 60 Mass.-%, geschieht.

11. Verfahren nach einem der Ansprüche 1 bis 10, **dadurch gekennzeichnet, dass** die selektive Abtrennung der Kunststoffmatrix von den Fasern und/oder Armierungen zumindest bei der Fraktion mit hohem Anteil an Fasern und/oder Armierungen mittels Pyrolyse, Thermolyse oder Solvolyse geschieht.

12. Verfahren nach einem der Ansprüche 1 bis 11, **dadurch gekennzeichnet, dass** zumindest die Fraktion mit geringem Anteil an Fasern und/oder Armierungen zerkleinert wird.

13. Verfahren nach Anspruch 12, **dadurch gekennzeichnet, dass** das anlässlich der Zerkleinerung der Fraktion mit geringem Anteil an Fasern und/oder Armierungen erhaltene Pulver und/oder Granulat
- als Füll- oder Verstärkungsstoff eingesetzt;
- oder thermisch verwertet wird; und/oder
- in Unterfraktionen aus der Gruppe zerkleinerte Fasern und/oder Armierungen, zerkleinerte Kunststoffmatrix, Mischung aus zerkleinerter Kunststoffmatrix mit noch enthaltenen Faser- und/oder Armierungsfragmenten und gegebenenfalls Füllstoffe fraktioniert wird.

14. Verfahren nach einem der Ansprüche 1 bis 13, **dadurch gekennzeichnet, dass** die verwendeten Formteile aus der Gruppe Rotorblätter und Gondeln für Windkraftanlagen, Schiffsrümpfe und Bootskörper, Flugzeugrümpfe und -flügel sowie Tanks gewählt werden.

## Claims

1. Method for recovering fibres and/or reinforcements from moulded parts made of plastic composite materials, in particular moulded parts of a large format, wherein
- firstly regions of the moulded part with a high proportion of fibres and/or reinforcements and regions with a comparatively lower proportion of fibres and/or reinforcements are identified; after which
- the moulded part is broken up by means of explosive charges in a way corresponding to the previously identified regions with a high proportion of fibres and/or reinforcements and regions with a comparatively lower proportion of fibres and/or reinforcements to form at least two fractions of fragments of the moulded part with a high proportion of fibres and/or reinforcements and with a comparatively lower proportion of fibres and/or reinforcements; and
- the fibres and/or reinforcements at least from at least one fraction with a high proportion of fibres and/or reinforcements are recovered by selectively separating the polymer matrix from the fibres and/or reinforcements.

2. Method according to Claim 1, **characterized in that** the breaking up of the moulded part takes place by means of predominantly linear explosive charges, in particular by means of explosive cords.

3. Method according to Claim 2, **characterized in that**, at least along the length of the explosive cords, explosive mats or water-filled containers are applied to the moulded part that is to be broken up.

4. Method according to one of Claims 1 to 3, **characterized in that** the breaking up of the moulded part takes place in the case of hollow moulded parts by at least partial arrangement of explosive charges in at least some cavities and activation of the explosive charges.

5. Method according to Claim 4, **characterized in that** at least some cavities of the moulded part are filled with water.

6. Method according to one of Claims 1 to 5, **characterized in that** moulded parts made of plastic composite materials containing long and/or continuous fibres, in particular in the form of bundles of fibres, of two-dimensional and three-dimensional fibrous structures are used.

7. Method according to one of Claims 1 to 6, **characterized in that** moulded parts with
- fibres from the group comprising glass, carbon, metal and aramid fibres and mixtures thereof and/or
- reinforcements from the group comprising glass, carbon, metal and aramid reinforcements and mixtures thereof
are used.

8. Method according to one of Claims 1 to 7, **characterized in that** moulded parts made of plastic composite materials with a thermosetting polymer matrix are used.

9. Method according to one of Claims 1 to 8, **characterized in that** the identification of the regions of a high proportion of fibres and/or reinforcements and regions of a comparatively lower proportion of fibres and/or reinforcements takes place by means of acoustic, spectroscopic, thermographic or inductive processes.

10. Method according to one of Claims 1 to 9, **characterized in that** the formation of the at least two fractions of moulded-part fragments with a high proportion of fibres and/or reinforcements and with a comparatively lower proportion of fibres and/or reinforcements takes place by fixing a threshold value for the proportion of fibres and/or reinforcements in the range from 25% by mass to 70% by mass, in particular in the range from 30% by mass to 60% by mass.

11. Method according to one of Claims 1 to 10, **characterized in that** the selective separation of the polymer matrix from the fibres and/or reinforcements, at least in the case of the fraction with a high proportion of fibres and/or reinforcements, takes place by means of pyrolysis, thermolysis or solvolysis.

12. Method according to one of Claims 1 to 11, **characterized in that** at least the fraction with a low proportion of fibres and/or reinforcements is crushed.

13. Method according to Claim 12, **characterized in that** the powder and/or granules obtained when the fraction with a low proportion of fibres and/or reinforcements is crushed
- is used as a filler or reinforcing material;
- is used for thermal energy recovery; and/or
- is fractionated into subfractions from the group comprising crushed fibres and/or reinforcements, a crushed polymer matrix, a mixture of the crushed polymer matrix still containing fragments of fibres and/or reinforcements and possibly fillers.

14. Method according to one of Claims 1 to 13, **characterized in that** the moulded parts used are chosen from the group comprising rotor blades and nacelles of wind turbines, hulls of ships and boats, fuselages and wings of aircraft and tanks.

## Revendications

1. Procédé de récupération de fibres et/ou d'armatures à partir de pièces moulées en matériau synthétique composite, notamment de grande dimension, dans lequel :
- on identifie d'abord les zones de la pièce moulée avec une teneur élevée en fibres et/ou armatures ainsi qu'avec une teneur en fibres et/ou armatures proportionnellement davantage réduite ; puis
- la pièce moulée est découpée à l'aide de charges de dynamitage en fonction des zones à teneur élevée en fibres et/ou armatures précédemment identifiées ainsi qu'à teneur proportionnellement davantage réduite en fibres et/ou armatures, par formation d'au moins deux fractions de fragments de pièce moulée avec une teneur en fibres et/ou armatures davantage réduite en proportion ; et
- les fibres et/ou armatures sont récupérées au moins à partir d'au moins une fraction à teneur élevée en fibres et/ou armatures, par séparation sélective de la matrice en matière plastique d'avec les fibres et/ou armatures.

2. Procédé selon la revendication 1, **caractérisé en ce que** la séparation de la pièce moulée se produit à l'aide de charges de dynamitage de préférence en forme de ligne, notamment à l'aide de ficelles de dynamitage.

3. Procédé selon la revendication 2, **caractérisé en ce qu'**au moins des tapis de dynamitage ou des réservoirs remplis d'eau sont placés sur la pièce moulée à séparer, le long de la trajectoire des ficelles de dynamitage.

4. Procédé selon l'une quelconque des revendications 1 à 3, **caractérisé en ce que** la séparation de la pièce moulée se produit, dans le cas de pièces moulées creuses, au moins en partie par un agencement de charges de dynamitage dans au moins quelques espaces creux et l'activation des charges de dynamitage.

5. Procédé selon la revendication 4, **caractérisé en ce qu'**au moins quelques espaces creux de la pièce moulée sont remplis en eau.

6. Procédé selon l'une quelconque des revendications 1 à 5, **caractérisé en ce que** l'on utilise des pièces moulées en fibres longues et/ou sans fin, notamment sous la forme de paquets de fibres, de structures de fibres bi et/ou tridimensionnelles, contenant un matériau synthétique composite.

7. Procédé selon l'une quelconque des revendications 1 à 6, **caractérisé en ce que** l'on utilise des pièces moulées avec :
- des fibres sélectionnées dans le groupe composé par les fibres de verre, de carbone, de métal et d'aramide ainsi que de mélanges de celles-ci ; et/ou
- des armatures sélectionnées dans le groupe composé par les fibres de verre, de carbone, de métal et d'aramide ainsi que de mélanges de celles-ci.

8. Procédé selon l'une quelconque des revendications 1 à 7, **caractérisé en ce que** l'on utilise des pièces moulées en matériau synthétique composite avec une matrice en matière plastique duroplastique.

9. Procédé selon l'une quelconque des revendications 1 à 8, **caractérisé en ce que** l'identification des zones à teneur élevée en fibres et/ou armatures et des zones à teneur davantage réduite s'effectue à l'aide d'un procédé acoustique, spectroscopique, thermographique ou inductif.

10. Procédé selon l'une quelconque des revendications 1 à 9, **caractérisé en ce que** la formation des au moins deux fractions de fragments de pièce moulée à teneur élevée en fibres et/ou armatures ainsi que des zones à teneur davantage réduite se produit par détermination d'une valeur seuil pour la teneur en fibres et/ou armatures dans la plage de 25 % en masse à 70 % en masse, notamment dans la plage de 30 % en masse à 60 % en masse.

11. Procédé selon l'une quelconque des revendications 1 à 10, **caractérisé en ce que** la séparation sélective de la matrice en matière plastique d'avec les fibres et/ou armatures se produit au moins pour la fraction à teneur élevée en fibres et/ou armatures, par pyrolyse, thermolyse ou solvolyse.

12. Procédé selon l'une quelconque des revendications 1 à 11, **caractérisé en ce qu'**au moins la fraction à teneur réduite en fibres et/ou armatures est fragmentée.

13. Procédé selon la revendication 12, **caractérisé en ce que** la poudre et/ou le granulat obtenus à l'occasion du fractionnement de la fraction à teneur réduite en fibres et/ou armatures :
- sont utilisés comme matière de remplissage ou de renforcement ; ou
- sont valorisés thermiquement ; et/ou
- sont fractionnés en sous-fractions sélectionnées dans le groupe des fibres et/ou armatures fractionnées, de la matrice en matière plastique fractionnée, d'un mélange de matrice en matière plastique fractionné avec des fragments de fibre et/ou d'armature encore contenus à l'intérieur et le cas échéant de matières de remplissage.

14. Procédé selon l'une quelconque des revendications 1 à 13, **caractérisé en ce que** les pièces moulées utilisées sont sélectionnées dans le groupe composé par les pales de rotor et nacelles pour éoliennes, coques de bateau et d'embarcation, coques et ailes d'avion ainsi que des réservoirs.
